# EUROPÄISCHE PATENTSCHRIFT

(11) **EP 0 833 765 B1**
(45) Veröffentlichungstag und Bekanntmachung des Hinweises auf die Patenterteilung: **31.03.1999**
(21) Anmeldenummer: 96920801.6
(22) Anmeldetag: 06.06.1996
(51) Int. Cl.: B60S 3/04

(54) **VORRICHTUNG ZUR BEHANDLUNG EINES GEGENSTANDES**
INSTALLATION FOR CLEANING AN OBJECT
DISPOSITIF DE NETTOYAGE D'UN OBJET

(30) Priorität: 23.06.1995 DE 19522881
(43) Veröffentlichungstag der Anmeldung: 08.04.1998
(73) Patentinhaber: Alfred Kärcher GmbH & Co., 71364 Winnenden (DE)
(72) Erfinder: KURZ, Roland, D-74405 Gaildorf (DE); MERZ, Erwin, D-71334 Waiblingen (DE); GEISELHART, Marc, D-71263 Weil der Stadt (DE); BERNHOF, Arnold, D-73734 Esslingen (DE); BERNLÖHR, Dieter, D-73614 Schorndorf (DE)
(74) Vertreter: Böhme, Ulrich, Dr. Dipl.-Phys.
(86) Internationale Anmeldenummer: EP9602458
(87) Internationale Veröffentlichungsnummer: WO9700797

(56) Entgegenhaltungen:
- WO-A-89/06614
- US-A- 4 848 383
- PATENT ABSTRACTS OF JAPAN vol. 017, no. 324 (M-1433), 21.Juni 1993 & JP,A,05 039004 (HONDA MOTOR CO LTD), 19.Februar 1993,

## Beschreibung

Die Erfindung betrifft eine Vorrichtung zur Behandlung eines Gegenstandes mit einem U-förmigen Behandlungsportal, das einen oberhalb des Gegenstandes angeordneten Kopfbalken und zwei seitlich des Gegenstandes angeordnete, quer zum Kopfbalken verlaufende Seitenbalken aufweist, an denen jeweils mindestens ein Behandlungsmedium gegen den Gegenstand richtende Abgabeeinrichtungen angeordnet sind.

Derartige aus der US-A-4 848 383 bekannte Behandlungsportale werden vielfältig zur Reinigung von Gegenständen eingesetzt, beispielsweise zur Reinigung von Kraftfahrzeugen. In diesem Falle werden die Portale als feste Bauteile einer Waschanlage verwendet, sie sind in der Regel als U-förmig ausgebildete, starre Baueinheiten eingesetzt und werden relativ zu dem zu reinigenden Kraftfahrzeug bewegt, beispielsweise auf Schienen verfahren.

Solche Portalanlagen zur Behandlung von Gegenständen werden ortsfest eingesetzt. Ein mobiler Einsatz ist wegen des sperrigen Aufbaus der Portale kaum möglich, allein der Transport eines U-förmigen großen Portals würde ganz erhebliche Schwierigkeiten hervorrufen.

Es ist Aufgabe der Erfindung, eine gattungsgemäße Vorrichtung so auszugestalten, daß sie in einfacher Weise transportabel wird.

Es ist Aufgabe der Erfindung, eine gattungsgemäße Vorrichtung so auszugestalten, daß sie in platzsparender Weise transportabel wird.

Diese Aufgabe wird bei einer Vorrichtung der eingangs beschriebenen Art erfindungsgemäß dadurch gelöst, daß die beiden Seitenbalken des Portals aus einer Arbeitslage, in der sie quer zum Kopfbalken stehen, in eine Ruhelage verschwenkbar sind, in der sie parallel zum Kopfbalken angeordnet sind, so daß das Portal platzsparend zu einem transportablen Paket zusammenklappbar ist.

Auf diese Weise ist es möglich, das Portal in ein Paket umzuwandeln, dessen Abmessungen im wesentlichen durch den Kopfbalken bestimmt werden. Eine solche Baueinheit ist leicht transportierbar, beispielsweise auf dem Auflieger eines Sattelschleppers, und kann daher ohne größere Schwierigkeiten an eine gewünschte Stelle transportiert werden, an der das Portal durch Ausklappen der Seitenbalken wieder voll funktionsfähig eingesetzt wird.

Besonders vorteilhaft ist es dabei, wenn die Seitenbalken und der Kopfbalken quer zur Längsrichtung des Kopfbalkens gegeneinander versetzt sind, so daß die Seitenbalken und der Kopfbalken in der Ruhelage nebeneinander liegen. Es läßt sich damit eine besonders geringe Bauhöhe des Portals in Ruhelage erreichen.

Bei einer bevorzugten Ausführungsform ist vorgesehen, daß der Kopfbalken am Portal höhenverstellbar gelagert ist.

Weiterhin kann vorgesehen sein, daß die Seitenbalken in der Arbeitslage in Längsrichtung des Kopfbalkens verstellbar am Portal gelagert sind. Durch diese Ausgestaltung wird es möglich, das Portal an die Größe der zu behandelnden Gegenstände anzupassen, die Kopfbalken und die Seitenbalken können so eingestellt werden, daß unabhängig von der Größe des zu behandelnden Gegenstandes der Abstand zwischen Kopfbalken und Seitenbalken einerseits und dem zu behandelnden Gegenstand andererseits im wesentlichen gleich gewählt ist.

Bei einer bevorzugten Ausführungsform ist vorgesehen, daß das Portal einen Rahmen aufweist, an dem der Kopfbalken und die Seitenbalken gelagert sind.

Vorzugsweise kann der Rahmen den Kopfbalken und die Seitenbalken in ihrer Ruhelage aufnehmen, so daß der Rahmen gleichzeitig ein Gehäuse für die Bauelemente des Portals bildet, wenn diese in die Ruhelage eingeschwenkt sind.

Der Kopfbalken kann am Rahmen durch einen Verstellantrieb höhenverstellbar gelagert sein.

Vorteilhaft ist es, wenn jedem Seitenbalken ein Träger zugeordnet ist, der am Portal verschwenkbar gelagert ist.

Diese Lagerung kann grundsätzlich auch am Kopfbalken erfolgen, es ist aber vorteilhaft, wenn der Träger am Rahmen verschwenkbar gelagert ist.

Weiterhin ist es günstig, wenn der Seitenbalken am Träger über einen Verstellantrieb in unterschiedlichen Abstand vom Träger verstellbar gelagert ist. Die Verstellantriebe können beispielsweise durch hydraulische Kolbenzylinderaggregate gebildet werden, bei einer bevorzugten Ausführungsform ist vorgesehen, daß die Verstellantriebe des Kopfbalkens und/oder der Seitenbalken Scherengestänge umfassen.

Bei einer bevorzugten Ausführungsform sind der Kopfbalken und/oder die Seitenbalken über längenveränderliche Gasführungskanäle mit einem Gebläse verbunden. Dabei ist es vorteilhaft, wenn die Gasführungskanäle in ihrem längenveränderlichen Bereich durch in Richtung der Verstellbarkeit des Kopfbalkens beziehungsweise der Seitenbalken teleskopierend ineinander geführte Leitungsabschnitte gebildet sind. Diese Ausgestaltung ermöglicht es, auch bei positionsveränderlichen Kopf- und Seitenbalken eine gasdichte Verbindung zum Gebläse herzustellen.

Bei einer bevorzugten Ausführungsform ist vorgesehen, daß der Kopfbalken und/oder die Seitenbalken zwei parallel verlaufende Kammern aufweisen, die sich über ihre Länge erstrecken, wobei eine Kammer mit einem Gebläse verbunden ist und Gasaustrittsöffnungen aufweist, während in der anderen Kammer Zuführleitungen für flüssige Medien verlaufen, die jeweils zu Auslaßöffnungen für die flüssigen Medien führen.

Die beschriebene Behandlungsvorrichtung kann in herkömmlicher Weise eine Waschanlage sein, die beispielsweise die zu behandelnden Gegenstände mit Wasser, mit Reinigungschemikalien, mit Konservierungsmitteln oder mit Trocknungsluft beaufschlagt, es können aber auch Behandlungen mit anderen Gasen oder flüssigen Chemikalien vorgesehen werden, beispielsweise zum Aufbringen von Dekontaminationsflüssigkeiten auf Gegenstände und Fahrzeuge.

Die nachfolgende Beschreibung bevorzugter Ausführungsformen der Erfindung dient im Zusammenhang mit der Zeichnung der näheren Erläuterung. Es zeigen:
- Figur 1:: eine schematische Seitenansicht eines Fahrzeuges mit einem ein Portal tragenden Kran;
- Figur 2:: eine Ansicht des Fahrzeuges der Figur 1 mit auf das Fahrzeug aufgeladenem Portal;
- Figur 3:: eine schematische Draufsicht auf ein Fahrzeug mit einem längs des Fahrzeuges verfahrbaren Kran;
- Figur 4:: eine schematische Draufsicht auf ein Fahrzeug mit einem auf diesem stationär und drehbar angeordneten Kran mit längenveränderlichem Arm;
- Figur 5:: eine Ansicht ähnlich Figur 4 mit einem an einem Ende des Fahrzeuges angeordneten Kran;
- Figur 6:: eine Ansicht eines Fahrzeuges mit einem auf dem Fahrzeug längsverschieblich und drehbar angeordneten Kran mit verlängerbarem Arm;
- Figur 7:: eine Längsschnittansicht eines in der Ebene des Kopfbalkens geschnittenen Portals mit angehobenem Kopfbalken;
- Figur 8:: eine Ansicht ähnlich Figur 7 mit abgesenktem Kopfbalken;
- Figur 9:: eine Draufsicht auf das Portal der Figur 7 mit eingeschwenkten Seitenbalken;
- Figur 10:: eine Längsschnittansicht des Portals der Figur 7 in der Ebene eines Seitenbalkens mit ausgeschwenkten und maximal ausgefahrenen Seitenbalken;
- Figur 11:: eine Ansicht ähnlich Figur 10 mit eingefahrenen Seitenbalken;
- Figur 12:: eine Schnittansicht längs Linie 12-12 in Figur 10 und
- Figur 13:: eine perspektivische Ansicht eines Portals mit abgesenktem Kopfbalken und teilweise eingefahrenem Seitenbalken, wobei zur besseren Deutlichkeit nur ein Seitenbalken dargestellt ist.

Das erfindungsgemäße Portal wird nachstehend in Kombination mit einem fahrbaren Kran erörtert, der das Portal im Betrieb trägt. Es handelt sich dabei um eine besonders bevorzugte Ausgestaltung, da der Kran nicht nur die Bewegung des Portals im Betrieb ermöglicht, sondern auch das Verladen des Portals selber. Es versteht sich aber, daß das beschriebene, zusammenklappbare Portal auch ohne einen solchen Kran eingesetzt werden kann, grundsätzlich wäre es möglich, ein klappbares Portal als Selbstfahrgerät auszubilden, beispielsweise können die Seitenbalken an ihren freien Enden Fahrgestelle tragen. Grundsätzlich wäre es auch möglich, ein solches zusammenklappbares Portal nach dem Ausklappen stationär aufzustellen und den zu reinigenden Gegenstand relativ zum Portal zu bewegen.

Bei dem dargestellten Ausführungsbeispiel ist auf dem Auflieger 1 eines Sattelschlepperfahrzeuges 2 ein Kran 3 angeordnet. Dieser umfaßt ein Führerhäuschen 4 sowie einen mehrteiligen Kranarm 5, dessen Abschnitte 6, 7, 8 teleskopierend aneinander gelagert sind, so daß die Länge des Kranarmes 5 verstellbar ist. Die Abschnitte 6, 7, 8 sind gelenkig mit einem Stützfuß 9 verbunden, und der Winkel zwischen dem Kranarm 5 und dem Stützfuß 9 kann durch ein hydraulisch betätigbares Kolbenzylinderaggregat 10 verstellt werden, so daß dadurch die Neigung des Kranarmes 5 ebenfalls frei wählbar ist. Auch der Stützfuß 9 kann seinerseits verschwenkbar am Kran 3 gelagert sein, so daß seine Neigung über ein weiteres Kolbenzylinderaggregat 11 verstellbar ist.

Am freien Ende des Kranarmes 5 ist über einen Verbindungskopf 12 ein Portal 13 am Kranarm 5 gehalten, welches eine Quertraverse 14 und senkrecht von ihr nach unten abstehende Seitenwangen 15, 16 umfaßt.

Der Verbindungskopf 12 weist eine horizontale Drehachse 17 und eine senkrechte Drehachse 18 auf, und durch in der Zeichnung nicht dargestellte Antriebsmittel ist der Verbindungskopf 12 sowohl um die Drehachse 17 als auch um die Drehachse 18 verstellbar, so daß es dadurch möglich wird, die Position des Portals 13 relativ zum Kranarm 5 in der gewünschten Weise einzustellen. Die Antriebe für die horizontale Drehachse 17 und die vertikale Drehachse 18 werden durch eine Steuerung des Kranes aktiviert und können in einer erreichten Stellung festgelegt werden, so daß praktisch bei stillstehendem Antrieb der Drehachsen 17 und 18 der Kranarm 5 mit dem Portal 13 einen starren Körper bildet.

Das Portal 13 bildet eine Behandlungsvorrichtung für einen Gegenstand 19 aus, der von dem Portal 13 überfangen wird, beispielsweise ein Fahrzeug. Dazu trägt das Portal 13 sowohl in der Quertraverse 14 als auch in den Seitenwangen 15, 16 Abgabevorrichtungen für bestimmte Medien, beispielsweise für Reinigungsflüssigkeiten, Reinigungschemikalien, Konservierungschemikalien oder Trocknungsluft, die bei einer Relativbewegung des Portals 13 und des Gegenstandes 19 auf alle Oberflächen des Gegenstandes aufgebracht werden können, wie dies an sich von Portalen von Kraftfahrzeugwaschanlagen bekannt ist. Die Versorgung für die einzelnen über das Portal abzugebenden Medien kann am Kran 3 oder am Auflieger 1 angeordnet sein, beispielsweise kann der Kran 3 ein Gebläse 20 zur Erzeugung von Trocknungsluftströmen tragen. Für die Versorgung mit flüssigen Medien können flexible Schlauchleitungen im Kranarm 5 verlegt sein, die in der Zeichnung nicht gesondert dargestellt sind.

Für die Behandlung eines Gegenstandes durch das Portal 13 ist es notwendig, den Gegenstand 19 und das Portal 13 relativ zueinander zu verschieben. Dies kann im einfachsten Falle bei festgehaltenem Portal 13 dadurch erfolgen, daß der Gegenstand unter dem Portal hindurchbewegt wird, bei einem Fahrzeug beispielsweise durch Eigenantrieb.

In vielen Fällen ist es aber wünschenswert, den Gegenstand stationär zu belassen und die Relativbewegung durch eine Bewegung des Portals längs des Gegenstandes zu erreichen, also längs eines Arbeitsweges, der den gesamten Gegenstand überstreicht.

Dies wird durch eine entsprechende Bewegung des Kranes 3 erreicht, der dabei das Portal mitnimmt und es längs des Arbeitsweges verschiebt.

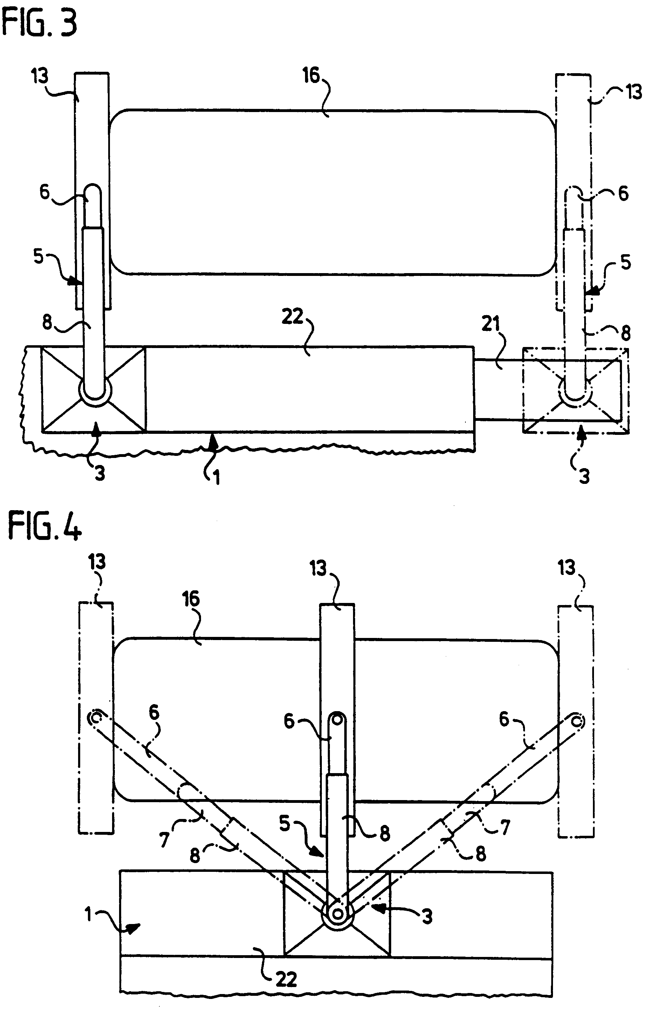

In den Figuren 3 bis 6 sind schematisch verschiedene Möglichkeiten dargestellt, wie durch eine Bewegung des Kranes eine solche Verschiebung des Portales 13 längs des Arbeitsweges erreicht werden kann.

Bei dem Ausführungsbeispiel der Figur 3 beispielsweise ist der Kran 3 mittels eines Schlittens längs des Aufliegers 1 verfahrbar. Um diese Fahrbahn zu verlängern, ist bei dem Auflieger 1 gemäß Figur 3 vorgesehen, daß der Auflieger 1 einseitig eine Verlängerung 21 trägt. Dies kann beispielsweise ein an den Auflieger 1 angesetztes Schienenstück für den Kran 3 sein.

Durch die Verfahrbarkeit des Kranes 3 auf dem Auflieger 1 ist es möglich, bei festgehaltenem Kranarm 5 das Portal 13 neben dem Auflieger 1 um eine Strecke parallel zu sich selbst zu verschieben, die der Länge des Fahrweges des Kranes 3 auf dem Auflieger 1 entspricht. Es ist dabei vorteilhaft, das Portal 13 quer zur Verschieberichtung einzustellen und in dieser Stellung zu belassen.

Wie in allen anderen nachstehend beschriebenen Fällen ist es möglich, durch Veränderung der Länge des Kranarmes 5, der Neigung des Kranarmes 5 und durch Verstellung des Verbindungskopfes 12 das Portal 13 vor Beginn des Behandlungsvorganges in eine Position zu bringen, die der Position des zu behandelnden Gegenstandes entspricht, so daß es nicht notwendig ist, den zu behandelnden Gegenstand und den Auflieger 1 in eine exakt bestimmte Relativposition zu bringen, eine genaue Justierung ist durch den Kran möglich.

Eine Anordnung, wie sie in Figur 3 gezeigt ist, setzt voraus, daß der Kran längs des Aufliegers 1 frei verfahren werden kann, dazu muß der Auflieger 1 entsprechend ausgebildet sein, außerdem muß der Fahrweg des Kranes auf dem Auflieger 1 für den Betrieb frei sein.

Bei einer Ausgestaltung, wie sie in Figur 4 dargestellt ist, sind diese Voraussetzungen nicht notwendig. Der Kran 3 ist dabei am Auflieger 1 stationär angeordnet, die Bewegung des Portales 13 erfolgt lediglich durch Veränderung der Länge des Kranarmes 5 und durch gleichzeitige Drehung des Kranes 3 um seine senkrechte Drehachse. Auch auf diese Weise ist es möglich, das Portal längs eines geradlinigen Arbeitsweges zu verschieben, allerdings müssen dabei die Längenverstellung des Kranarmes und die Verschwenkbewegung des Kranes 3 koordiniert ablaufen und aufeinander abgestimmt werden. Außerdem ist es bei dieser Ausgestaltung zusätzlich notwendig, auch den Verbindungskopf 12 während der gesamten Bewegung des Portals zu verstellen um sicherzustellen, daß das Portal 13 parallel zu sich selbst bewegt wird. Die Steuerung des Kranes übernimmt eine solche koordinierte Bewegung, bei der die Länge des Kranarmes, die Drehung des Kranes und die Drehung des Verbindungskopfes jeweils aufeinander abgestimmt werden.

Bei dem Ausführungsbeispiel der Figur 4 ist der Kran 3 in der Mitte des Aufliegers 1 angeordnet, der Arbeitsweg verläuft bei dieser Ausgestaltung parallel zum Auflieger 1.

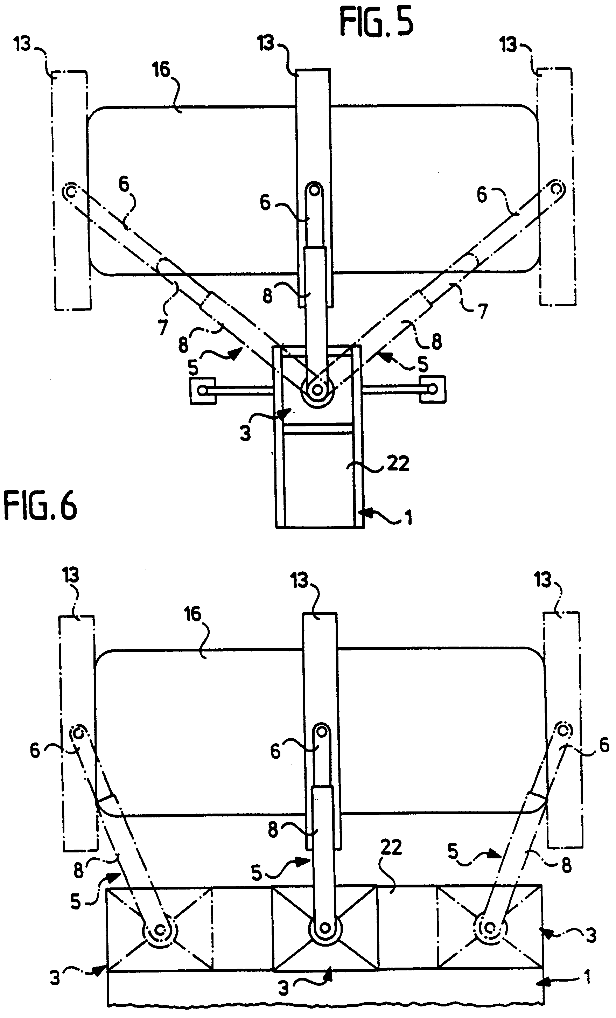

Eine ähnliche Ausgestaltung ergibt sich bei der Anordnung der Figur 5, diese unterscheidet sich lediglich dadurch von der der Figur 4, daß der Kran 3 an einem Ende des Aufliegers 1 angeordnet ist und der Auflieger 1 daher vorzugsweise senkrecht zum Arbeitsweg angeordnet wird. Der Arbeitsweg liegt also hinter dem Auflieger 1 und verläuft quer zu dessen Längsrichtung.

Bei dem Ausführungsbeispiel der Figur 6 sind die Bewegungsmöglichkeiten der Ausführungsbeispiele der Figur 3 einerseits und der Figuren 4 und 5 andererseits miteinander kombiniert. Der Kran 3 ist auf dem Auflieger 1 verfahrbar angeordnet, allerdings fehlt in diesem Falle eine Verlängerung 21 des Aufliegers 1, das heißt der Fahrweg des Kranes 3 längs des Aufliegers 1 ist relativ kurz. Um diesen Fahrweg zu verlängern, wird das Portal durch den Kran 3 durch Drehen des Kranes 3 um seine senkrechte Achse und durch koordinierte Längenänderung des Kranarmes 5 längs des Arbeitsweges weiterbewegt, sobald der Kran 3 seine Endstellungen längs seiner eigenen Fahrbahn erreicht hat. Man erhält also einen zentralen Abschnitt des Arbeitsweges, bei dem der Kran 3 das Portal allein durch seine eigene Fahrbewegung bewegt, während sich an beiden Enden an diesen zentralen Abschnitt Abschnitte anschließen, bei denen das Portal allein durch die Drehung und die Änderung der Länge des Kranarmes bewegt wird. Auch bei dieser Ausgestaltung ist es natürlich notwendig, daß die Drehung des Kranes um die senkrechte Achse durch eine entsprechende Drehung des Verbindungskopfes 12 kompensiert wird, so daß auch bei dieser Verschiebebewegung das Portal 13 immer parallel zu sich selbst längs eines geradlinigen Arbeitsweges verschoben wird.

Bei allen Ausführungen ist es grundsätzlich möglich, den Arbeitsweg an die jeweiligen Gegebenheiten anzupassen, beispielsweise kann beim Einsatz der Vorrichtung in unebenem Gelände eine Neigung des Arbeitsweges eingeplant werden, es genügt dazu, die Steuerung der Kranbewegung entsprechend umzuprogrammieren. Eine solche Programmierung kann beispielsweise von Hand dadurch vorgenommen werden, daß man zunächst das Portal 13 von Hand längs des gewünschten Arbeitsweges verschiebt und die dabei jeweils eingenommenen Kranstellungen speichert. In einem weiteren Verfahrensablauf können dann die gespeicherten Daten zur Steuerung der Portalbewegung eingesetzt werden.

Ein besonderer Vorteil der beschriebenen Konstruktion liegt darin, daß der Kran 3 natürlich auch zum Auf- und Abbau der Vorrichtung eingesetzt werden kann, insbesondere zum Aufladen des Portals 13 auf den Auflieger 1.

Der Auflieger 1 weist neben dem Kran 3 eine Ladefläche 22 auf, die so ausgebildet ist, daß das Portal 13 auf dieser Ladefläche abgeladen werden kann, man erhält auf diese Weise eine selbständige und von externen Versorgungen unabhängige Behandlungseinheit.

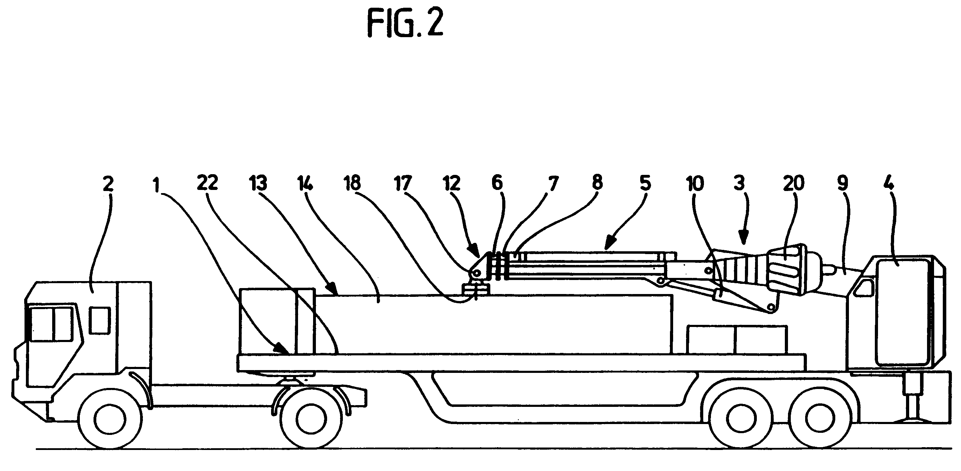

Die Seitenwangen 15 und 16 des Portals 13 sind in eine Ruhestellung einschwenkbar, bei der die Seitenwangen 15 und 16 parallel zur Quertraverse 14 angeordnet sind. Man erhält dadurch ein kompaktes Paket, das raumsparend auf der Ladefläche 22 des Sattelschlepperfahrzeuges 2 abgelegt werden kann, wie dies in Figur 2 dargestellt ist.

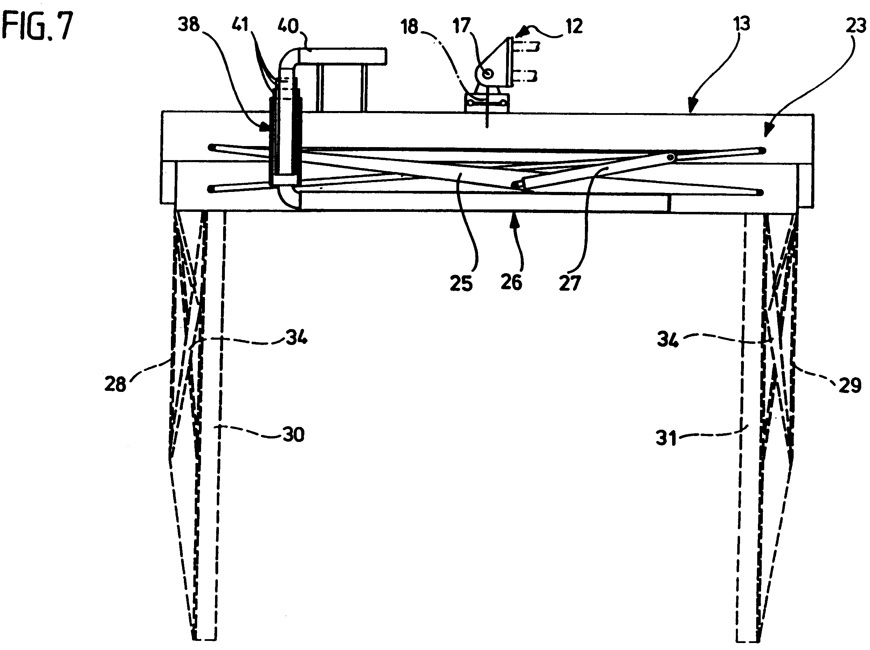

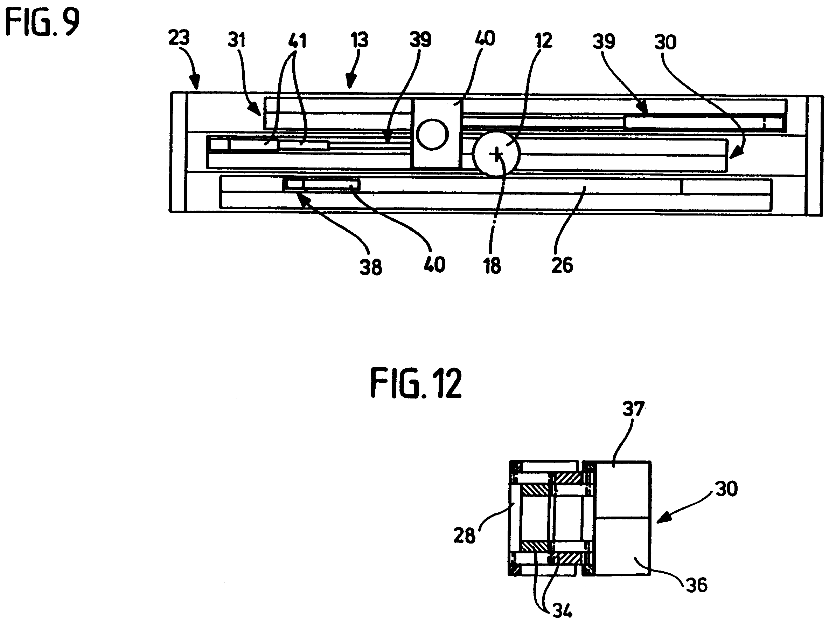

Ein bevorzugtes Ausführungsbeispiel eines in dieser Weise in eine Ruhelage einklappbaren Portals 13 wird nachstehend anhand der Figuren 7 bis 13 näher erläutert.

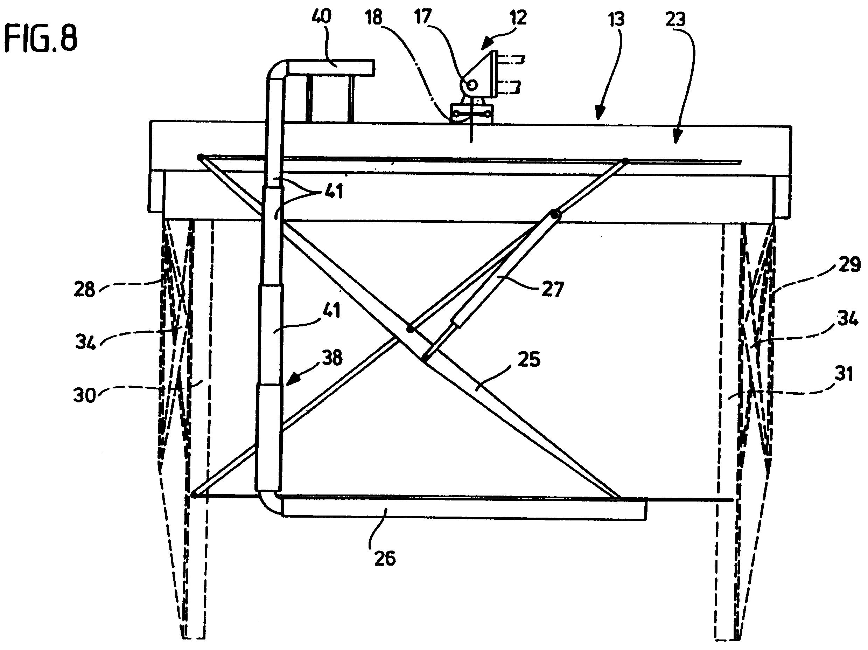

Das dort dargestellte Portal 13 umfaßt einen Rahmen 23, der die Quertraverse 14 bildet. Im dargestellten Ausführungsbeispiel ist der Rahmen 23 quaderförmig ausgebildet und wird durch einzelne Streben 14 gitter- oder fachwerkartig aufgebaut. Dieser Rahmen 23 ist in seiner Mitte mit dem Verbindungskopf 12 verbunden, an ihm ist über einen scherenförmigen Verstellantrieb 25 ein horizontaler Kopfbalken 26 gehalten. Der scherenförmige Verstellantrieb 25 umfaßt ein hydraulisch betätigbares Kolbenzylinderaggregat 27, durch welches der scherenförmige Verstellantrieb nach Bedarf zusammengefaltet und auseinandergeschoben werden kann, so daß dadurch der horizontale Kopfbalken 26 mehr oder weniger weit gegenüber dem Rahmen 23 abgesenkt wird. In Figur 7 ist der Kopfbalken 26 in der angehobenen, in Figur 8 in der abgesenkten Stellung gezeigt.

Der Verstellantrieb 25 und der Kopfbalken 26 haben eine Breite, die etwas geringer ist als ein Drittel der Breite des Rahmens 23, und sie sind an einer Längsseite dieses Rahmens 23 angeordnet, so daß neben dem Verstellantrieb 25 und dem Kopfbalken 26 ein freier Raum im Rahmen 23 verbleibt, in dem zwei Träger 28 und 29 und jeweils daran gehaltene Seitenbalken 30 beziehungsweise 31 aufgenommen werden können. Die Träger 28 und 29 und die Seitenbalken 30 und 31 sind jeweils gleich aufgebaut, allerdings spiegelverkehrt, im folgenden wird daher die Erfindung im wesentlichen an einem der beiden Träger und dem entsprechend zugeordneten Seitenbalken erörtert.

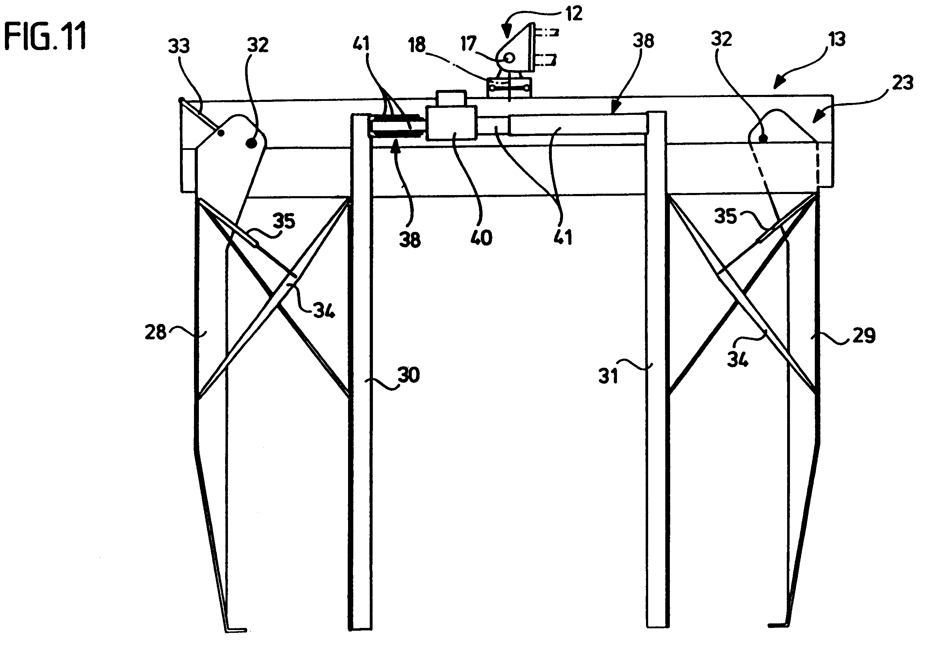

Wie insbesondere aus der Darstellung der Figur 11 erkennbar ist, ist der Träger 28 am Rahmen 23 um eine quer zur Längsachse des Rahmens 23 verlaufende Drehachse 32 verschwenkbar gelagert. An dem Träger 28 greift ein Kolbenzylinderaggregat 33 an, durch welches der Träger 28 aus einer Ruhelage, in der er parallel zum Kopfbalken 26 verlaufend in den Rahmen 23 eingeschwenkt ist, und einer Arbeitslage verschwenkbar ist, in der er senkrecht nach unten vom Rahmen 23 absteht.

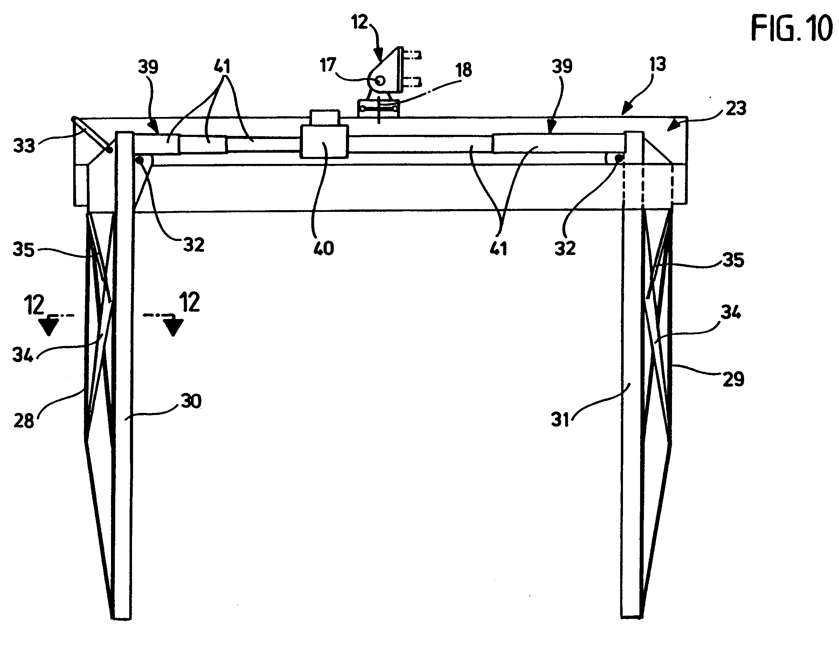

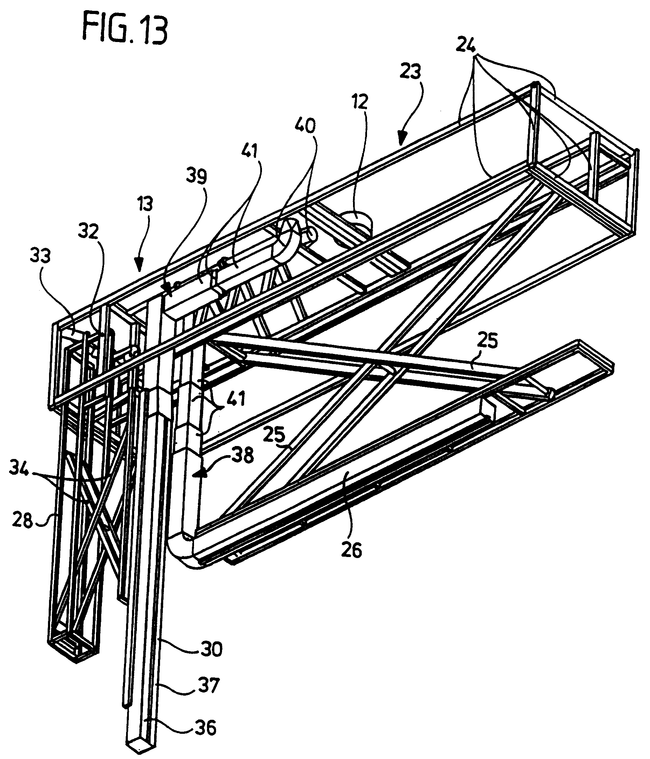

Der Träger 28 ist im wesentlichen im Querschnitt U-förmig ausgebildet (Figur 12) und nimmt eine scherenförmige Verstellvorrichtung 34 auf, der ein weiteres Kolbenzylinderaggregat 34 zugeordnet ist, durch welches die scherenförmige Verstellvorrichtung 34 zwischen einer eingefalteten Stellung (Figur 10) und einer ausgeschobenen Stellung (Figur 11) verschoben werden kann. An der Verstellvorrichtung 34 ist der Seitenbalken 30 gehalten, der sich über die gesamte Höhe des Trägers 28 erstreckt und der durch die Verstellvorrichtung 34 in Positionen verschoben werden kann, die mehr oder weniger weit vom Träger 28 entfernt sind.

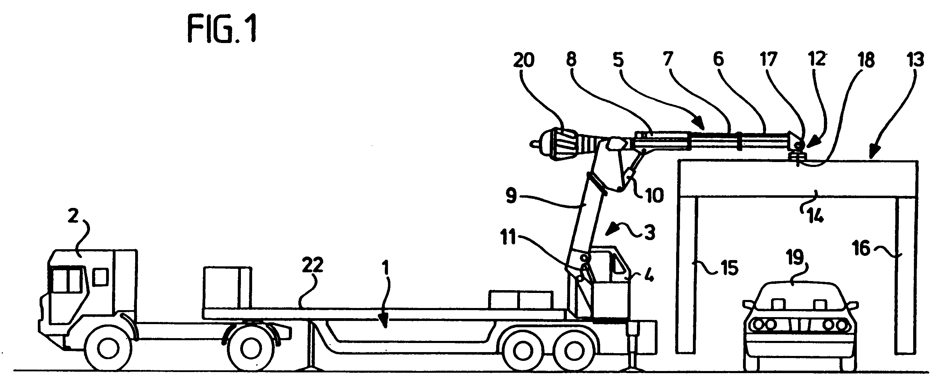

In der Arbeitsstellung, in der der Träger 28 und der Seitenbalken 30 aus dem Rahmen 23 ausgeschwenkt sind, ist es daher möglich, den Abstand der beiden Seitenbalken 30 und 31 in der gewünschten Weise einzustellen, außerdem kann durch Verstellung der Kopfbalken 26 mehr oder weniger tief gegenüber dem Rahmen 23 abgesenkt werden. Es ist auf diese Weise möglich, den von den beiden Seitenbalken und dem Kopfbalken gebildeten U-förmigen Innenraum des Portals 13 in seiner Größe zu verändern und somit an einen jeweils zu behandelnden Gegenstand 19 anzupassen. Ein solcher Gegenstand 19 kann beispielsweise ein Fahrzeug sein, wie dies in Figur 1 angedeutet ist, in den Figuren 7 bis 11 ist die Größe dieses Gegenstandes 19 durch ein Rechteck symbolisiert, das sich im wesentlichen dadurch ergibt, daß die Kanten dieses Rechteckes von dem Kopfbalken und den Seitenbalken einen gleichbleibenden Abstand einhalten.

Sowohl der Kopfbalken 26 als auch die Seitenbalken 30 und 31 weisen zwei nebeneinander angeordnete, sich über die gesamte Länge der Kopfbalken beziehungsweise der Seitenbalken erstreckende Kammern 36 und 37 auf (Figur 12). Die Kammer 36 ist ein Gaskanal, der über seine Länge mit einer Anzahl in der Zeichnung nicht dargestellter Öffnungen versehen ist, durch die ein Gasstrom abgegeben werden kann, der gegen den zu behandelnden Gegenstand 19 gerichtet ist. Jede Kammer 36 ist über eine Zufuhrleitung 38 beziehungsweise 39 mit einem am Rahmen 23 angeordneten Anschluß 40 verbunden, an den das Gebläse 20 anschließbar ist. Dieses Gebläse kann beispielsweise eine Heißgasturbine sein, es ist aber grundsätzlich möglich, in der Behandlungsvorrichtung auch andere Gase oder Dämpfe zuzuführen, so daß unter dem Begriff "Luftzufuhr" oder "Gaszufuhr" allgemein eine Zufuhr für beliebige Gase oder Dämpfe verstanden werden soll.

Die Zufuhrleitungen 38 und 39 weisen jeweils einen Bereich mit einer größeren Anzahl von Abschnitten 41 auf, die teleskopierend ineinander verschiebbar sind. Diese Bereiche verlaufen immer parallel zur Verschieberichtung des jeweiligen Balkens, so daß durch teleskopierendes, abgedichtetes Ineinanderschieben der Abschnitte 41 eine Längenveränderung der Zufuhrleitungen 38 beziehungsweise 39 erreicht wird, die der jeweiligen Position des Kopfbalkens 26 beziehungsweise der Seitenbalken 30 und 31 entspricht.

In den Kammern 37 sind Zufuhrleitungen für flüssige Medien verlegt, diese sind in der Zeichnung nicht dargestellt. Es kann sich bei diesen flüssigen Medien um Reinigungs- und Behandlungsflüssigkeiten aller Art handeln, beispielsweise um Wasser, um Reinigungschemikalien, um Konservierungschemikalien, um Dekontaminationschemikalien etc., wobei all diese Chemikalien je nach Bedarf verdünnt oder unverdünnt aufgebracht werden können, beispielsweise auch in Form von Schäumen etc. Zu diesem Zweck tragen die Kammern 37 Auslaßöffnungen, die über ihre Länge verteilt sind, die aber in der Zeichnung ebenfalls nicht dargestellt sind. Es kann sich dabei beispielsweise um feststehende oder um rotierende Kompakt- oder Flachstrahldüsen handeln, um Schaumabgabedüsen etc. Die Zufuhrleitungen für flüssige Medien können über flexible Schläuche mit dem Rahmen 23 verbunden sein und von dort über den Kranarm 5 zu Versorgungseinrichtungen auf dem Auflieger 1 führen.

Für den Antransport befindet sich das Portal 13 in der Ruhelage, das heißt die Träger 28 und 29 mit den Seitenbalken 30 und 31 sind in den Rahmen 23 eingeschwenkt, die Seitenbalken 30 und 31 befinden sich dabei in der am weitesten an die Träger 28 beziehungsweise 29 angenäherten Stellung. Auch der Kopfbalken 26 ist vollständig angehoben und in den Rahmen 23 eingefahren. Der Rahmen 23 nimmt somit den Kopfbalken 26 sowie die Seitenbalken 30 und 31 mit ihren Verstelleinrichtungen vollständig in sich auf und bildet ein quaderförmiges Paket, in dem sich das gesamte Portal befindet. Diese Einheit liegt auf der Ladefläche 22 des Aufliegers 1 (Figur 2) und ist mit dem Kranarm 5 über den Verbindungskopf 12 verbunden.

Zum Einsatz des Portals wird dieses Paket mittels des Kranes 3 von der Ladefläche 22 abgehoben und in eine Stellung ausgeschwenkt, wie sie beispielsweise in Figur 1 dargestellt ist. Anschließend werden beide Träger 28 und 29 durch die Kolbenzylinderaggregate 33 nach unten ausgeschwenkt. In Figur 7 ist das Portal in seiner Ruhelage mit ausgezogenen Linien dargestellt, die nach unten ausgeschwenkten Träger und Seitenbalken sind gestrichelt gezeigt. Sobald dieses Ausschwenken erfolgt ist, befindet sich das Portal 13 in der Arbeitslage. Zur Anpassung an die Größe des zu behandelnden Gegenstandes werden dann noch durch die Verstellantriebe 25 sowie 34 der Kopfbalken 26 abgesenkt und die Seitenbalken 30 und 31 eingefahren. Zur Behandlung des Gegenstandes wird dann das Portal in der beschriebenen Weise mittels des Kranes längs seines Arbeitsweges verfahren.

Nach Beendigung des Behandlungsvorganges wird das Portal wieder in der umgekehrten Weise zusammengelegt und auf dem Auflieger 1 abgeladen, so daß insgesamt eine kompakte Transporteinheit entsteht, die in einfacher Weise an beliebiger Stelle wieder in Betrieb genommen werden kann, und zwar ohne größere Vorbereitungen, da das Portal 13 auch im aufgeladenen Zustand vorzugsweise mit dem Kranarm 5 verbunden bleibt. Dadurch ist der Abladevorgang rasch zu erledigen, und auch das Aufklappen des Portals und das Anpassen an die Größe des zu behandelnden Gegenstandes ist ohne Verzögerung und zügig durchführbar.

## Patentansprüche

1. Vorrichtung zur Behandlung eines Gegenstandes mit einem U-förmigen Behandlungsportal (13), das einen oberhalb des Gegenstandes angeordneten Kopfbalken (26) und zwei seitlich des Gegenstandes angeordnete, quer zum Kopfbalken verlaufende Seitenbalken (30, 31) aufweist, an denen jeweils mindestens ein Behandlungsmedium gegen den Gegenstand richtende Abgabeeinrichtungen angeordnet sind, dadurch gekennzeichnet, daß die beiden Seitenbalken (30, 31) des Portals (13) aus einer Arbeitslage, in der sie quer zum Kopfbalken (26) stehen, in eine Ruhelage verschwenkbar sind, in der sie parallel zum Kopfbalken (26) angeordnet sind, so daß das Portal (13) platzsparend zu einem transportablen Paket zusammenklappbar ist.

2. Vorrichtung nach Anspruch 1, dadurch gekennzeichnet, daß die Seitenbalken (30, 31) und der Kopfbalken (26) quer zur Längsrichtung des Kopfbalkens (26) gegeneinander versetzt sind, so daß die Seitenbalken (30, 31) und der Kopfbalken (26) in Ruhelage nebeneinander liegen.

3. Vorrichtung nach einem der Ansprüche 1 oder 2, dadurch gekennzeichnet, daß der Kopfbalken (26) am Portal (13) höhenverstellbar gelagert ist.

4. Vorrichtung nach einem der Ansprüche 1 bis 3, dadurch gekennzeichnet, daß die Seitenbalken (30, 31) in der Arbeitslage in Längsrichtung des Kopfbalkens (26) verstellbar am Portal (13) gelagert sind.

5. Vorrichtung nach einem der Ansprüche 1 bis 4, dadurch gekennzeichnet, daß das Portal (13) einen Rahmen (23) aufweist, an dem der Kopfbalken (26) und die Seitenbalken (30, 31) gelagert sind.

6. Vorrichtung nach Anspruch 5, dadurch gekennzeichnet, daß der Rahmen (23) den Kopfbalken (26) und die Seitenbalken (30, 31) in ihrer Ruhelage aufnimmt.

7. Vorrichtung nach Anspruch 5 oder 6, dadurch gekennzeichnet, daß der Kopfbalken (26) am Rahmen (23) durch einen Verstellantrieb (25) höhenverstellbar ausgebildet ist.

8. Vorrichtung nach einem der Ansprüche 1 bis 7, dadurch gekennzeichnet, daß jedem Seitenbalken (30, 31) ein Träger (28, 29) zugeordnet ist, der am Portal (13) verschwenkbar gelagert ist.

9. Vorrichtung nach Anspruch 8, dadurch gekennzeichnet, daß der Träger (28, 29) am Rahmen (23) verschwenkbar gelagert ist.

10. Vorrichtung nach Anspruch 8 oder 9, dadurch gekennzeichnet, daß der Seitenbalken (30, 31) am Träger (28, 29) über einen Verstellantrieb (34) in unterschiedlichem Abstand vom Träger (28, 29) verstellbar gelagert ist.

11. Vorrichtung nach einem der Ansprüche 7 oder 10, dadurch gekennzeichnet, daß die Verstellantriebe (25; 34) des Kopfbalkens (26) und/oder der Seitenbalken (30, 31) Scherengestänge umfassen.

12. Vorrichtung nach einem der Ansprüche 3 bis 11, dadurch gekennzeichnet, daß der Kopfbalken (26) über einen längenveränderlichen Gasführungskanal (38) mit einem Gebläse (20) verbunden ist.

13. Vorrichtung nach einem der Ansprüche 4 bis 12, dadurch gekennzeichnet, daß die Seitenbalken (30, 31) über einen längenveränderlichen Gasführungskanal (39) mit einem Gebläse (20) verbunden sind.

14. Vorrichtung nach einem der Ansprüche 12 oder 13, dadurch gekennzeichnet, daß die Gasführungskanäle (38, 39) in ihrem längenveränderlichen Bereich durch in Richtung der Verstellbarkeit des Kopfbalkens (26) beziehungsweise der Seitenbalken (30, 31) teleskopierend ineinandergeführte Leitungsabschnitte (41) gebildet sind.

15. Vorrichtung nach einem der voranstehenden Ansprüche, dadurch gekennzeichnet, daß der Kopfbalken (26) und /oder die Seitenbalken (30, 31) zwei parallel verlaufende Kammern (36, 37) aufweisen, die sich über ihre Länge erstrecken, wobei eine Kammer (36) mit einem Gebläse (20) verbunden ist und Gasaustrittsöffnungen aufweist, während in der anderen Kammer (37) Zuführleitungen für flüssige Medien verlaufen, die jeweils zu Auslaßöffnungen für die flüssigen Medien führen.

## Claims

1. An installation for the treatment of an object, comprising a U-shape treatment gantry (13) which has a top bar (26) arranged above the object and two side bars (30, 31) arranged laterally of the object and extending transversely to the top bar, on which are arranged respective delivery devices directing at least one treatment agent towards the object, characterised in that the two side bars (30, 31) of the gantry (13) may be pivoted from an operating position in which they are located transversely to the top bar (26) into an inoperative position in which they are arranged parallel to the top bar (26), so that the gantry (13) may be folded together in a space-saving manner into a transportable package.

2. An installation according to claim 1, characterised in that the side bars (30, 31) and the top bar (26) are mutually offset transversely to the longitudinal direction of the top bar (26), so that the side bars (30, 31) and the top bar (26) lie side by side in the inoperative position.

3. An installation according to one of claims 1 or 2, characterised in that the top bar (26) is mounted on the gantry (13) so as to be vertically adjustable.

4. An installation according to one of claims 1 to 3, characterised in that the side bars (30, 31) are mounted on the gantry (13) so as to be adjustable in the operating position in the longitudinal direction of the top bar (26).

5. An installation according to one of claims 1 to 4, characterised in that the gantry (13) has a frame (23) on which the top bar (26) and the side bars (30, 31) are mounted.

6. An installation according to claim 5, characterised in that the frame (23) accommodates the top bar (26) and the side bars (30, 31) in their inoperative position.

7. An installation according to claim 5 or 6, characterised in that the top bar (26) is designed so as to be vertically adjustable on the frame (23) by means of an adjusting mechanism (25).

8. An installation according to one of claims 1 to 7, characterised in that associated with each side bar (30, 31) is a support (28, 29) which is pivotally mounted on the gantry (13).

9. An installation according to claim 8, characterised in that the support (28, 29) is pivotally mounted on the frame (23).

10. An installation according to claim 8 or 9, characterised in that the side bar (30, 31) is mounted on the support (28, 29) so as to be adjustable by way of an adjusting mechanism (34) at a variable distance from the support (28, 29).

11. An installation according to one of claims 7 or 10, characterised in that the adjusting mechanisms (25; 34) of the top bar (26) and/or the side bars (30, 31) comprise scissor-type linkages.

12. An installation according to one of claims 3 to 11, characterised in that the top bar (26) is connected to a blower (20) by way of a gas-carrying duct (38) which is variable in length.

13. An installation according to one of claims 4 to 12, characterised in that the side bars (30, 31) are connected to a blower (20) by way of a gas-carrying duct (39) which is variable in length.

14. An installation according to one of claims 12 or 13, characterised in that the gas-carrying ducts (38, 39) are formed in their length-varying region by pipe sections (41) telescoping into one another in the direction in which the top bar (26) or the side bars (30, 31) are adjustable.

15. An installation according to one of the preceding claims, characterised in that the top bar (26) and/or the side bars (30, 31) have two chambers (36, 37) running parallel which extend over the length thereof, one chamber (36) being connected to a blower (20) and having gas outlet openings, while in the other chamber (37) run feed pipes for fluid media which lead to respective outlet openings for the fluid media.

## Revendications

1. Dispositif pour traiter un objet, comportant un portique de traitement (13) en forme de U qui présente une poutre de tête (26) agencée au-dessus de l'objet, et deux poutres latérales (30, 31) agencées latéralement à côté de l'objet et s'étendant transversalement à la poutre de tête, sur lesquelles sont agencés des dispositifs distributeurs dirigeant au moins un fluide de traitement vers l'objet, caractérisé en ce que les deux poutres latérales (30, 31) du portique (13) peuvent être pivotées depuis une position de travail dans laquelle elles se trouvent transversalement à la poutre de tête (26), jusque dans une position de repos dans laquelle elles sont agencées parallèlement à la poutre de tête (26), de sorte que le portique (13) est rabattable de manière à économiser de la place pour former un paquet transportable.

2. Dispositif selon la revendication 1, caractérisé en ce que les poutres latérales (30, 31) et la poutre de tête (26) sont décalées les unes par rapport aux autres transversalement à la direction longitudinale de la poutre de tête (26), de sorte que les poutres latérales (30, 31) et la poutre de tête (26) se trouvent les unes à côté des autres en position de repos.

3. Dispositif selon l'une ou l'autre des revendications 1 et 2, caractérisé en ce que la poutre de tête (26) est montée de façon variable en hauteur sur le portique (13).

4. Dispositif selon l'une quelconque des revendications 1 à 3, caractérisé en ce que dans la position de travail, les poutres latérales (30, 31) sont montées sur le portique (13) de façon variable en direction longitudinale de la poutre de tête (26).

5. Dispositif selon l'une quelconque des revendications 1 à 4, caractérisé en ce que le portique (13) présente un cadre (23) sur lequel sont montées la poutre de tête (26) et les poutres latérales (30, 31).

6. Dispositif selon la revendication 5, caractérisé en ce que le cadre (23) reçoit la poutre de tête (26) et les poutres latérales (30, 31) dans leur position de repos.

7. Dispositif selon l'une ou l'autre des revendications 5 et 6, caractérisé en ce que la poutre de tête (26) est réalisée sur le cadre (23) de façon réglable en hauteur par un entraînement de déplacement (25).

8. Dispositif selon l'une quelconque des revendications 1 à 7, caractérisé en ce qu'un support respectif (28, 29) est associé à chaque poutre latérale (30, 31), lequel est monté en pivotement sur le portique (13).

9. Dispositif selon la revendication 8, caractérisé en ce que le support (28, 29) est monté en pivotement sur le cadre (23).

10. Dispositif selon l'une ou l'autre des revendications 8 et 9, caractérisé en ce que la poutre latérale (30, 31) est montée sur le support (28, 29) de façon réglable à différentes distances par rapport au support (28, 29) par un entraînement de déplacement (34).

11. Dispositif selon l'une ou l'autre des revendications 7 et 10, caractérisé en ce que les entraînements de déplacement (25 ; 34) de la poutre de tête (26) et/ou des poutres latérales (30, 31) comportent des tringleries à parallélogramme.

12. Dispositif selon l'une quelconque des revendications 3 à 11, caractérisé en ce que la poutre de tête (26) est reliée à un ventilateur (20) via un canal d'amenée de gaz (38) variable en longueur.

13. Dispositif selon l'une quelconque des revendications 4 à 12, caractérisé en ce que les poutres latérales (30, 31) sont reliées à un ventilateur (20) via un canal d'amenée de gaz (39) variable en longueur.

14. Dispositif selon l'une ou l'autre des revendications 12 et 13, caractérisé en ce que les canaux d'amenée de gaz (38, 39) sont formés dans leur région variable en longueur par des tronçons de conduite (41) guidés de façon télescopique les uns dans les autres en direction du réglage de la poutre de tête (26) ou des poutres latérales (30, 31).

15. Dispositif selon l'une quelconque des revendications précédentes, caractérisé en ce que la poutre de tête (26) et/ou les poutres latérales (30, 31) présentent deux chambres parallèles (36, 37) qui s'étendent sur la longueur desdites poutres, et en ce qu'une chambre (36) est reliée au ventilateur (20) et présente des ouvertures de sortie de gaz, tandis que dans l'autre chambre (37) sont posées des conduites d'amenée pour des fluides liquides, qui mènent chacune à des ouvertures de sortie pour les fluides liquides.
